# EUROPEAN PATENT APPLICATION

(11) **EP 2 363 738 A2**
(43) Date of publication of application: **07.09.2011**
(21) Application number: 11001413.1
(22) Date of filing: 21.02.2011
(51) Int. Cl.: G02B 6/00, F21S 8/10, F21S 8/12, F21V 5/00

(54) **Lighting device for vehicle**

(30) Priority: 24.02.2010 JP 2010038246
(71) Applicant: STANLEY ELECTRIC CO., LTD., Tokyo 153-8636 (JP)
(72) Inventor: Okada, Hidetaka, Tokyo 153-8636 (JP); Matsumaru, Takuya, Tokyo 153-8636 (JP)
(74) Representative: Wagner, Karl H.

(57) **Abstract**

Disclosed is a lighting device for a vehicle in which an emitting section (73) is constituted of a plurality of emitting parts (731, 732) when a translucent cover (4) has a slanted wall which faces the emitting section (73) and is slanted with respect a front direction, wherein the plurality of emitting parts are parallelly provided along a slanting direction of the slanted wall via the light guide section (72) and the two emitting parts which are adjacent to each other are disposed by having a level difference between each other in a front-back direction so as to trace a slant of the slanted wall. Thereby, when the translucent cover (4) is seen from the front, the emitting parts can be visually confirmed uniformly.

## Description

### BACKGROUND OF THE INVENTION

### 1. Field of the Invention

The present invention relates to a lighting device for a vehicle.

### 2. Description of the Related Art

Conventionally, there is known a lighting device for a vehicle having a configuration in which a light source is provided in a lamp house formed in the vehicle and a light guide is provided in front of the light source, wherein light from the light source is guided into the light guide to be branched so that the light is emitted from a plurality of emitting sections (for example, see JP 4,290,601).

According to the above lighting device for a vehicle, the light from the light source is made to be emitted from a plurality of emitting sections by using the light guide. Therefore, the light is emitted in a wide range from arbitrary positions regardless of the position of the light entering section.

However, in the above lighting device for a vehicle of JP 4, 290, 601, the emitting surfaces of the plurality of emitting sections are provided on the same surface. Therefore, when the translucent cover which covers the emitting sections is slanted with respect to the emitting surfaces of the emitting sections, the distances between each of the emitting sections and the translucent cover differ from each other. Therefore, when seen from the front through the translucent cover, the emitting sections are observed differently.

For example, in a state where the lighting device for a vehicle is not lit, the emitting sections close to the translucent cover can be observed clearly when seen from the front through the translucent cover. However the emitting sections away from the translucent cover are difficult to be observed. This is not preferable in view of designing.

Further, when the emitting sections are seen from the front in a state where the lighting device of the vehicle is lit, the light emitting surfaces of the emitting sections close to the translucent cover are vivid. However, the light emitting surfaces of the emitting sections away from the translucent cover are blurred. Thus, unevenness in light emitting occurs.

### SUMMARY OF THE INVENTION

An object of the present invention is to make the emitting sections be observed uniformly along the slanting direction of the translucent cover when the emitting sections are seen from the front through the translucent cover in the lighting device for a vehicle which includes the translucent cover that is slanted with respect to the emitting sections.

To solve the above problem, a lighting device for a vehicle reflecting one aspect of the present invention includes a translucent cover which closes a lamp house of the vehicle, a light source which is provided in the lamp house and a light guide which is provided in front of the light source in the lamp house, the light guide including an emitting section having an emitting surface which faces forward and a light guide section which is formed integrally with the emitting section and which introduces light from the light source inside to guide the light to the emitting section, and the translucent cover has a slanted wall which faces the emitting section and is slanted with respect to a front direction, the emitting section is constituted of a plurality of emitting parts, the plurality of emitting parts are arranged parallelly along a slanting direction of the slanted wall via the light guide section, and two of the emitting parts which are adjacent to each other have a level difference between each other in a front-back direction so as to trace a slant of the slanted wall.

### BRIEF DESCRIPTION OF DRAWINGS

The above and other objects, advantages and features of the present invention will become more fully understood from the detailed description given hereinbelow and the appended drawings which are given by way of illustration only, and thus are not intended as a definition of the limits of the present invention, and wherein:
FIG. 1 is a front view of a combination lamp which is installed at the rear left side of a vehicle;
FIG. 2 is a cross-sectional view when cut along the line II-II shown in FIG. 1;
FIG. 3 is a cross-sectional view when cut along the line III-III shown in FIG. 1;
FIG. 4 is a front schematic view of a tail lamp;
FIG. 5 is a back schematic view of a light guide unit;
FIG. 6 is a cross-sectional view of a light guide module;
FIG. 7 is a schematic view showing light paths in the light guide module;
FIG. 8 is a schematic view of the light guide module according to the second embodiment;
FIG. 9 is a schematic view of the light guide module according to the third embodiment; and
FIG. 10 is a cross-sectional view of the tail lamp according to the fourth embodiment.

### DETAILED DESCRIPTION OF THE PREFERRED EMBODIMENTS

Hereinafter, embodiments for carrying out the present invention will be described by using the drawings. Although various limitations preferable in the art for carrying out the present invention are exemplified in the following embodiments, the scope of the present invention is not limited to the embodiments and the examples shown in the drawings.

### <First embodiment>

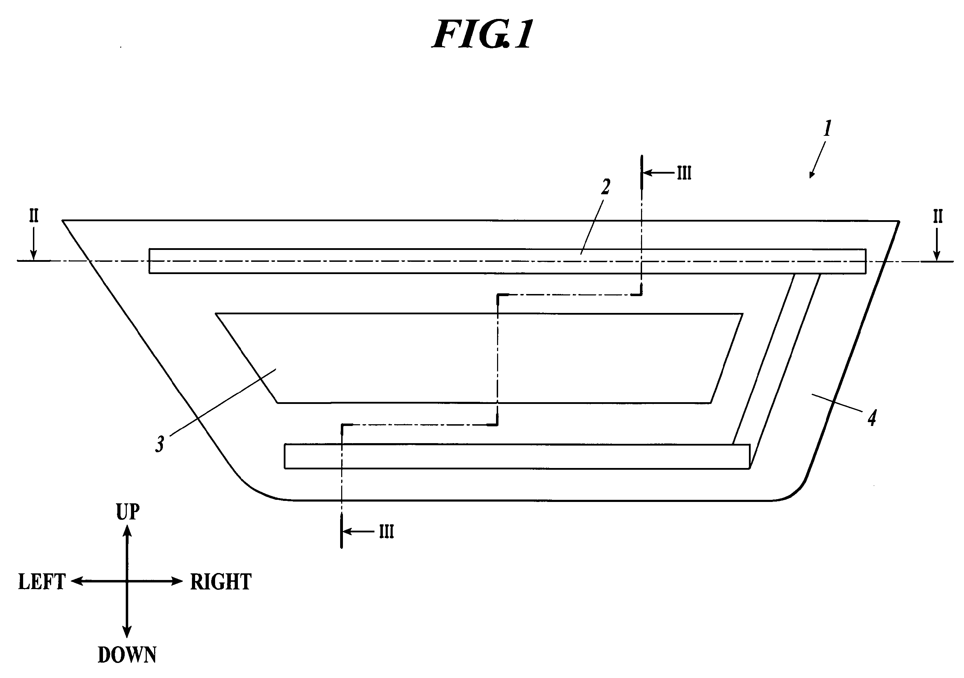

First, the first embodiment of the present invention will be described with reference to FIGS. 1 to 7.

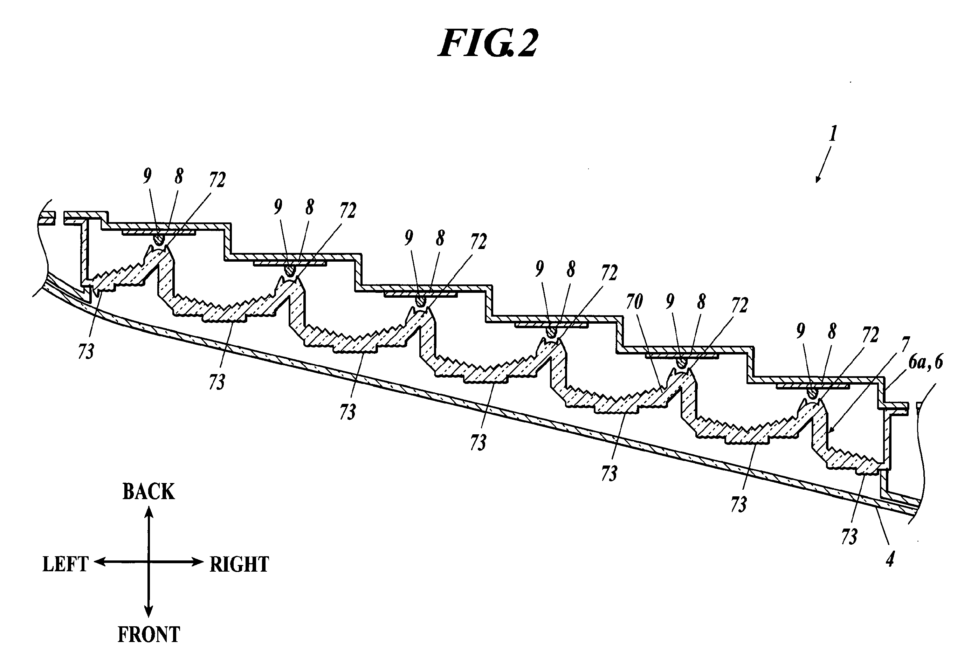

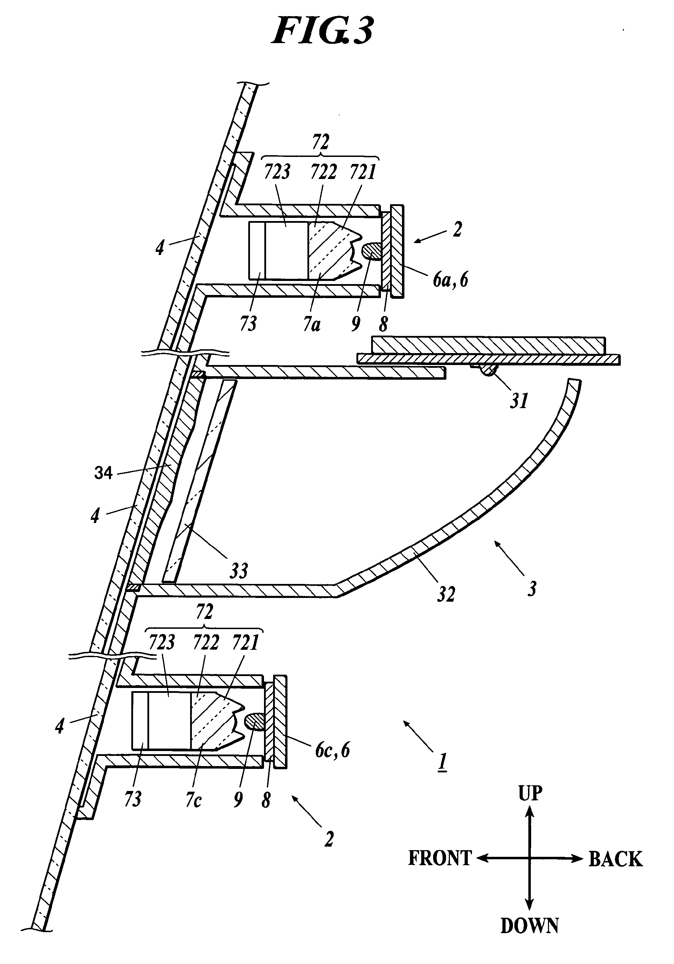

FIG. 1 is a front view of a combination lamp 1 which is installed at the rear left side of a vehicle, FIG. 2 is a cross-sectional view when cut along the line II-II shown in FIG. 1 and FIG. 3 is a cross-sectional view when cut along the line III-III shown in FIG. 1.

The combination lamp is installed at each of rear left and rear right sides of a vehicle. However, because the combination lamp for right side and the combination lamp for left side have structures which are line symmetry to each other, only the combination lamp 1 which is to be installed at the rear left side of a vehicle will be described in the following description and drawings and descriptions of the combination lamp which is to be installed at the rear right side of a vehicle will be omitted.

Further, the combination lamp 1 which is to be installed at the rear left side of a vehicle will be installed in the vehicle so that the front face of the combination lamp 1 faces backward direction of the vehicle. Therefore, in the following description, it is assumed that "front (front side)", "back (back side)", "right" and "left" mean "front (front side)", "back (back side)", "right" and "left" when the vehicle is seen from the back unless there is a specific notification.

As shown in FIGS. 1 and 3, the combination lamp 1 of the embodiment includes a tail lamp 2 and a turn signal lamp 3 which are installed in a lamp house. The tail lamp 2 and the turn signal lamp 3 of the combination lamp 1 are covered with a translucent cover 4 which closes the opening of the lamp house.

The translucent cover 4 is slanted so that the right part thereof projects more forward than the left part thereof as shown in FIG. 2 when seen planarly and so that the lower part thereof projects more forward than the upper part thereof as shown in FIG. 3 when seen from the right side, when the combination lamp 1 is installed in the vehicle.

The tail lamp 2 is set so as to extend in a line form along three sides (upper side, right side and lower side) of the translucent cover 4 as shown in FIG. 1 when seen from the front.

The turn signal lamp 3 is arranged at a position where three directions (up, right and left) are encircled by the tail lamp 2 as shown in FIG. 1 when seen from the front. The turn signal lamp 3 is formed in a shape similar to the outer shape of the translucent cover 4 when seen from the front.

As shown in FIG. 3, the turn signal lamp 3 includes a light emitting device 31 such as LED, a reflector 32, a transparent cover 33 and a diffusion plate 34. The turn signal lamp 3 has a configuration in which light from the light emitting device 31 is totally reflected by the reflector 32 and guided to the diffusion plate 34 through the transparent cover 33, and after the light is sufficiently diffused by the diffusion plate 34, the light is emitted outside through the translucent cover 4.

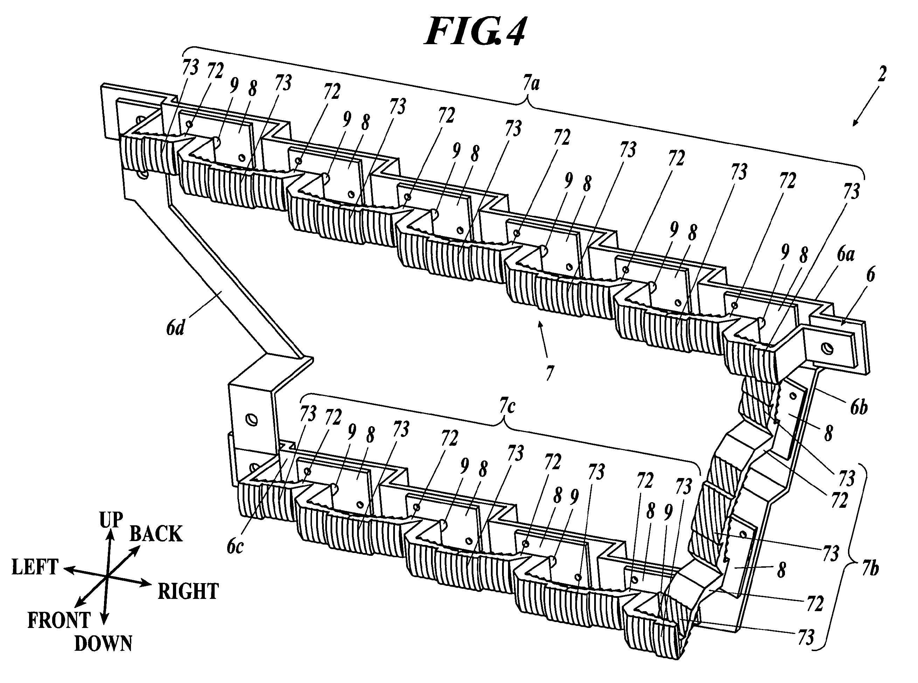

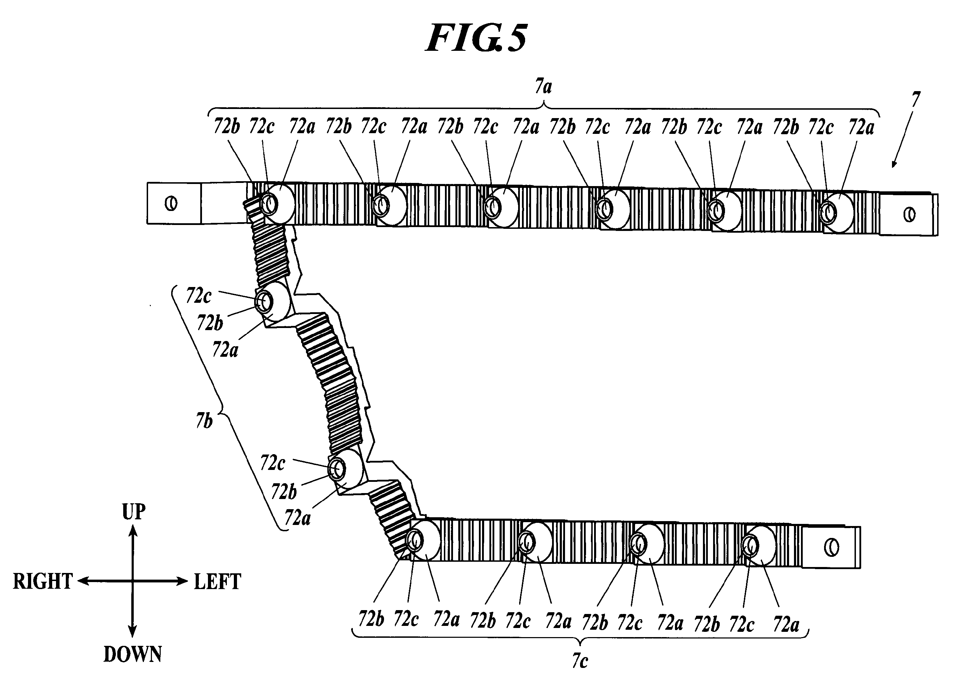

FIG. 4 is a front schematic view of the tail lamp 2 and FIG. 5 is a back schematic view of the light guide.

The tail lamp 2 includes a plurality of base plates 8, light emitting devices (light sources) 9 each of which is attached to each of the base plates 8, a light guide 7 which introduces the light from each of the light emitting devices 9 inside thereof and emits the light toward front direction and a supporting member 6 which supports the base plates 8, the light emitting devices 9 and the light guide 7.

The light guide 7 is constituted of an upper light guide 7a, a right light guide 7b and a lower light guide 7c. Each of the upper light guide 7a, the right light guide 7b and the lower light guide 7c includes a plurality of emitting sections (emitting parts) 73. Each of the emitting sections 73 is formed in a rectangular shape when seen from the front.

The upper light guide 7a is set so as to extend in a line form along the upper side of the translucent cover 4 when seen from the front. The upper light guide 7a is formed in stairs so as to trace the slant of a part of the translucent cover 4 that faces the upper light guide 7a. That is, with respect to any two emitting sections 73 which are adjacent to each other side by side, the emitting section on the right side is positioned more forward than the emitting section on the left side.

The right light guide 7b is set so as to extend in a line form along the right side of the translucent cover 4 when seen form the front. The right light guide 7b is formed in stairs so as to trace the slant of the translucent cover 4 that faces the right light guide 7b. That is, with respect to any two emitting sections 73 which are arranged one above the other, the lower emitting section is positioned more forward than the upper emitting section.

The lower light guide 7c is set so as to extend in a line form along the lower side of the translucent cover 4 when seen from the front. The lower light guide 7c is formed in stairs so as to trace the slant of a part of the translucent cover 4 that faces the lower light guide 7c. That is, with respect to any two emitting sections 73 which are adjacent to each other side by side, the emitting section on the right side is positioned more forward than the emitting section on the left side.

Each of the upper light guide 7a, the right light guide 7b and the lower light guide 7c includes light guide sections 72 which introduce the light from the light emitting devices 9 inside thereof to guide the light to the emitting sections 73 in addition to the plurality of emitting sections 73. In each of the upper light guide 7a, the right light guide 7b and the lower light guide 7c, the light guide sections 72 are formed integrally with the emitting sections 73, wherein one light guide section 72 being arranged between two emitting sections 73 which are adjacent to each other. Each light guide section 72 arranged in between two emitting sections 73 projects to back side of the emitting sections 73, and the back end of each light guide section 72 becomes narrower towards the back part and forms a truncated cone section 72a in which the light axis Ax (defined later) is the rotation symmetry axis.

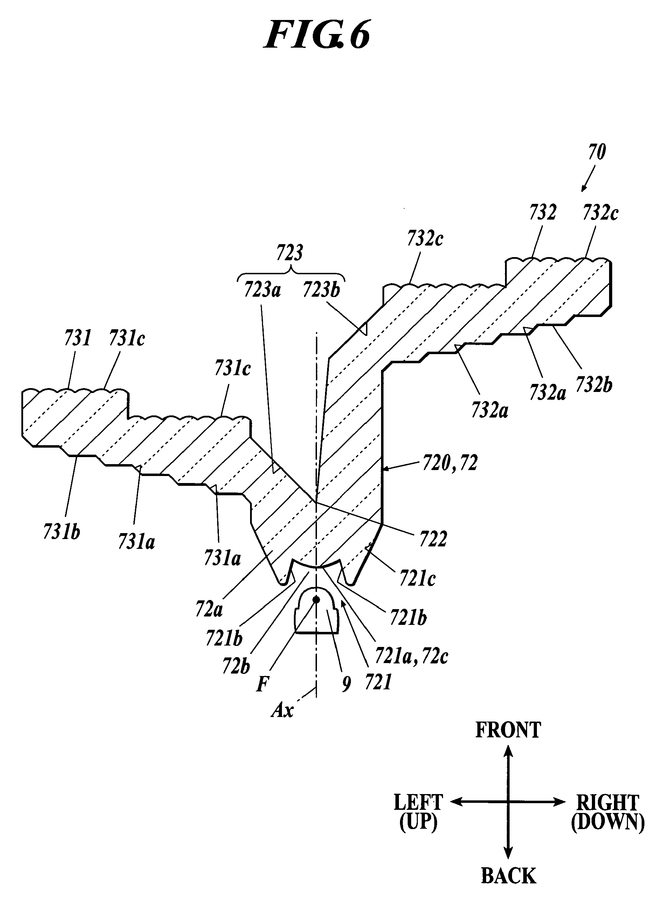

As shown in FIG. 6, each of the light guide sections 72 includes a light entering section 721 from which the light from the light emitting device 9 enters into the light guide, a branching section 722 which branches the light entered from the light entering section 721 in two and a reflecting section 723 which reflects the light which is branched in two by the branching section 722 separately toward the emitting sections 73 which are adjacent to each other.

Among the above, the light entering section 721 is structured to form the truncated cone section 72a as shown in FIG. 5. At the head part of the truncated cone section 72a, a cone hole 72b which opens toward back direction is formed. The cone hole 72b is formed in a cone shape in which the light axis Ax (defined later) is the rotation symmetry axis. At the bottom of the cone hole 72b, a convex surface (aspheric surface) 72c which bulges out toward back direction and which has the rotation symmetry axis is formed. The light axis Ax is defined as the rotation symmetry axis of the convex surface 72c.

In FIG. 6, one light source (light emitting device 9) and the light guide module which emits light by the one light source are shown.

The light guide module 70 includes the first emitting part 731, the second emitting part 732 and a light guide section 720 which guides the light from the light emitting device 9 to the first emitting part 731 and the second emitting part 732.

Among the above, the first emitting part 731 constitutes half of either one of the two emitting sections 73 in the light guide 7 which are adjacent to each other and the second emitting part 732 constitutes half of the other of the two emitting sections 73. Further, the light guide section 720 of the light guide module 70 corresponds to the light guide section 72 of the light guide 7.

By connecting a plurality of the light guide modules 70 in a line form, each of the upper light guide 7a, the right light guide 7b and the lower light guide 7c is constituted.

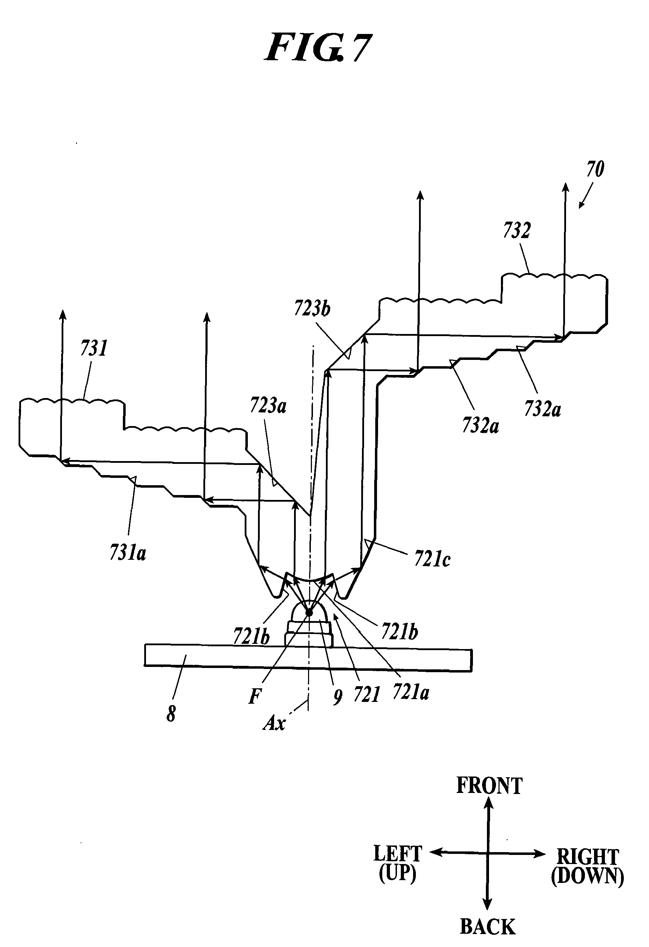

Therefore, the light guide sections 72 and the emitting sections 73 in the light guide 7 will be described in detail by using the light guide module 70 with reference to FIG. 7.

First, the light entering section 721 in the light guide section 72 will be described.

The convex surface 72c which is formed in the light entering section 721 structures the first light entering surface 721a. Further, the wall surface of the cone hole 72b structures the second light entering surface 721b and the wall surface of the truncated cone section 72a structures the reflecting surface 721c. Furthermore, the light emitting device 9 is set in a region which is enclosed by the first light entering surface 721a and the second light entering surface 721b, the light emitting device 9 facing front so as to match with the focus position of the first light entering surface 721a.

As shown in FIG. 7, the light entering section 721 functions to make the light from the light emitting device 9 which enters the first light entering surface 721a be the light which is parallel to the light axis Ax that emits toward the light axis Ax direction and makes the light which enters the second light entering surface 721b be the light parallel to the light axis Ax that emits toward the light axis Ax direction by totally reflecting the light by the reflecting surface 721c.

The branching section 722 is constituted of a bifurcated section, and the light from the first light entering surface 721a and the reflecting surface 721c is branched into two at the branching part of the bifurcated section.

The reflecting section 723 is constituted of the first reflecting surface 723a and the second reflecting surface 723b which reflect the light which is branched by the branching section 722 separately toward the first emitting part 731 and the second emitting part 732, respectively. The first reflecting surface 723a and the second reflecting surface 723b are formed to have level difference therebetween in the light axis Ax direction so as to correspond to the level difference between the first emitting part 731 and the second emitting part 732. The first reflecting surface 723a and the second reflecting surface 723b are slanted so as to have an angle of 45 degree with respect to the light axis Ax.

As shown in FIG. 7, the first reflecting surface 723a and the second reflecting surface 723b function to reflect the light which is branched in two by the branching section 722 separately to guide the lights to the first emitting part 731 and the second emitting part 732.

Here, the first reflecting surface 723a and the second reflecting surface 723b may be parabolic surfaces and not plane surfaces.

A plurality of reflecting surfaces 731a which reflect the light from the first reflecting surface 723a in the forward direction are provided at the back of the first emitting part 731.

That is, the back surface of the first emitting part 731 is formed in stairs. The stair treads 731b of the back surface of the first emitting part 731 which is formed in stairs are surfaces which are orthogonal to the light axis Ax, and the stair treads are made to be positioned more in front gradually as the stair treads be away from the light axis Ax. Each of the reflecting surfaces 731a is arranged between two stair treads 731b which are adjacent to each other and each of the reflecting surfaces 731a is formed so as to be parallel to the first reflecting surface 723a.

Moreover, as a whole, the front surface of the first emitting part 731 is a large cylindrical surface which bulges toward front having a bus bar in a direction orthogonal to the light axis Ax. On the front surface of the first emitting part 731, a plurality of cylindrical surfaces 731c which are smaller than the cylindrical surface which is the front surface of the first emitting part 731 are provided parallelly in a direction going away from the light axis Ax.

As shown in FIG. 7, the first emitting part 731 functions to diffuse and emit the light.

Here, it is not required that a plurality of reflecting surfaces 731a are formed, and one reflecting surface which is parallel to the first reflecting surface 723a may be formed. Further, a plurality of small lens surfaces for diffusing the light may be formed in a lattice form instead of the plurality of cylindrical surfaces 731c.

A plurality of reflecting surfaces 732a which reflect the light from the first reflecting surface 723b in the forward direction are provided at the back of the second emitting part 732.

That is, the back surface of the second emitting part 732 is formed in stairs. The stair treads 732b of the back surface of the second emitting part 732 which is formed in stairs are surfaces which are orthogonal to the light axis Ax, and the stair treads are made to be positioned more in front gradually as the stair treads be away from the light axis Ax. Each of the reflecting surfaces 732a is arranged between two stair treads 732b which are adjacent to each other, and each of the reflecting surfaces 732a is formed in parallel with the first reflecting surface 723b.

Moreover, as a whole, the front surface of the second emitting part 732 is a large cylindrical surface which bulges toward front having a bus bar in a direction orthogonal to the light axis Ax, for example. Further, on the front surface of the second emitting part 732, a plurality of cylindrical surfaces 732c which are smaller than the cylindrical surface which is the front surface of the second emitting part 732 are provided parallelly in a direction going away from the light axis Ax.

As shown in FIG. 7, the second emitting part 732 functions to diffuse and emit the light.

Here, it is not required that a plurality of reflecting surfaces 732a are formed, and one reflecting surface which is parallel to the second reflecting surface 723b may be formed. Further, a plurality of small lens surfaces (prism surfaces) for diffusing the light may be formed in a lattice form instead of the plurality of cylindrical surfaces 732c.

Next, the supporting member 6 will be described with reference to FIGS. 2 to 4.

When seen from the front, the supporting member 6 is constituted of an upper supporting plate 6a, a right supporting plate 6b and a lower supporting plate 6c which are respectively set so as to extend along the three sides (upper side, right side and lower side) of the translucent cover 4. Further, an enforcing plate 6d is bridged between the left end of the upper supporting plate 6a and the left end of the lower supporting plate 6c.

The upper supporting plate 6a is for supporting the upper light guide 7a. When seen from the front, the upper supporting plate 6a is set so as to extend in a line form along the upper side of the translucent cover 4 similarly to the upper light guide 7a. The upper supporting plate 6a is bent to form stairs similarly as in the upper light guide 7a. That is, the upper supporting plate 6a has a plurality of stair treads, and with respect to any two stair treads which are adjacent to each other side by side, the stair tread on the right side is positioned more forward than the stair tread on the left side.

Moreover, the base plate 8 and the light emitting device 9 are attached at each of the stair treads of the upper supporting plate 6a, and the upper light guide 7a is attached to the upper supporting plate 6a so that each of the light guide sections 72 positions in front of each of the light emitting devices 9.

The right supporting plate 6b is for supporting the right light guide 7b. When seen from the front, the right supporting plate 6b is set so as to extend in a line form along the right side of the translucent cover 4 similarly to the right light guide 7b. Further, the right supporting plate 6b is bent to form stairs similarly as in the right light guide 7b. That is, the right supporting plate 6b has a plurality of stair treads, and with respect to any two stair treads which are arranged one above the other, the lower stair tread is positioned more forward than the upper stair tread.

Further, the base plate 8 and the light emitting device 9 are attached at each of the stair treads of the right supporting plate 6b, and the right light guide 7b is attached to the right supporting plate 6b so that each of the light guide sections 72 positions in front of each of the light emitting devices 9.

The lower supporting plate 6c is for supporting the lower light guide 7c. When seen from the front, the lower supporting plate 6c is set so as to extend in a line form along the lower side of the translucent cover 4 similarly to the lower light guide 7c. Further, the lower supporting plate 6c is bent to form stairs similarly as in the lower light guide 7c. That is, the lower supporting plate 6c has a plurality of stair treads, and with respect to any two stair treads which are adjacent to each other side by side, the stair tread on the right side is positioned more forward than the stair tread on the left side.

Moreover, the base plate 8 and the light emitting device 9 are attached at each of the stair treads of the lower supporting plate 6c, and the lower light guide 7c is attached to the lower supporting plate 6c so that each of the light guide sections 72 positions in front of each of the light emitting devices 9.

According to the light guide module of the first embodiment which is structured as above, the emitting section of the light guide 7 is constituted of a plurality of emitting sections (emitting parts) 73 having level differences so as to trace the slant in the slanting direction of the slanted wall of the translucent cover 4. Therefore, for example, in a state where the lighting device of the vehicle is not lit, the distances between the slanted wall of the translucent cover 4 and the emitting sections 73 are equal to each other. Therefore, the emitting sections 73 can be visually confirmed uniformly when seen from the front through the translucent cover 4. Further, in a state where the lighting device for the vehicle is lit, the degree of light emission of the light emitting surfaces of the emitting sections 73 are uniformly vivid when seen from the front.

### <Second embodiment>

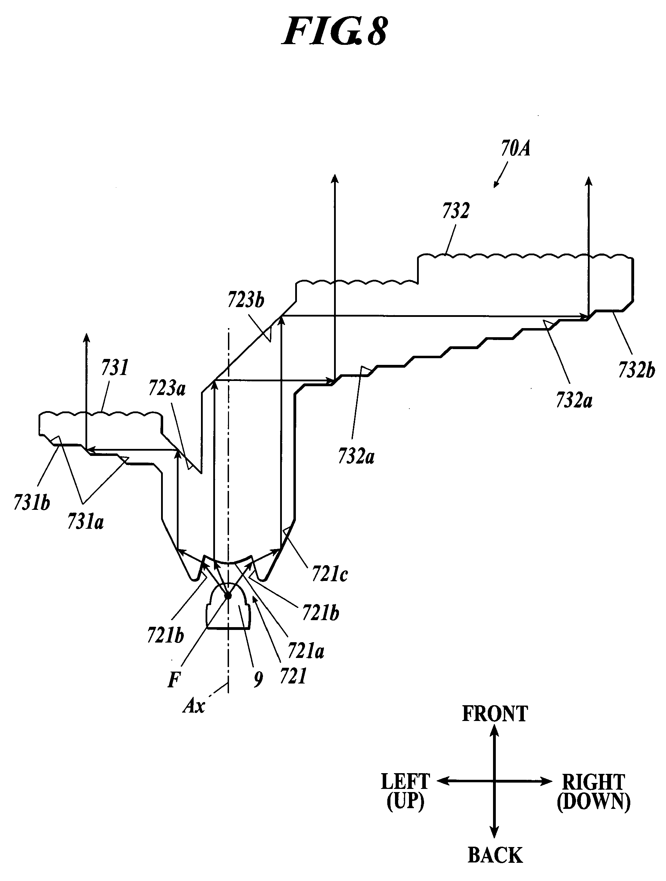

FIG. 8 is a schematic view of the light guide module according to the second embodiment. The second embodiment has a structure similar to that of the light guide 7 of the first embodiment by connecting the light guide modules 70A of FIG. 8 integrally in a line form instead of the light guide modules 70 of the first embodiment. Here, the diagram of the entire light guide which is formed by connecting the light guide modules 70A is not shown.

The light guide module 70A of the second embodiment is different from the light guide module 70 of the first embodiment in that the sizes of the first emitting part 731 and the second emitting part 732 are different and the light amount to be introduced in the first emitting part 731 and the light amount to be introduced in the second emitting part 732 are different. That is, in the light guide module 70A, the second emitting part 732 is larger than the first emitting part 731 and the light amount to be introduced in the second emitting part 732 is greater than the light amount to be introduced in the first emitting part 731.

Here, in FIG. 8, same symbols are used for the structures same as that of the first embodiment and the descriptions are omitted.

According to the second embodiment, the advantages similar to that of the first embodiment can be obtained, and further, flexibility in designing of a lighting device for a vehicle can be enhanced.

### <Third embodiment>

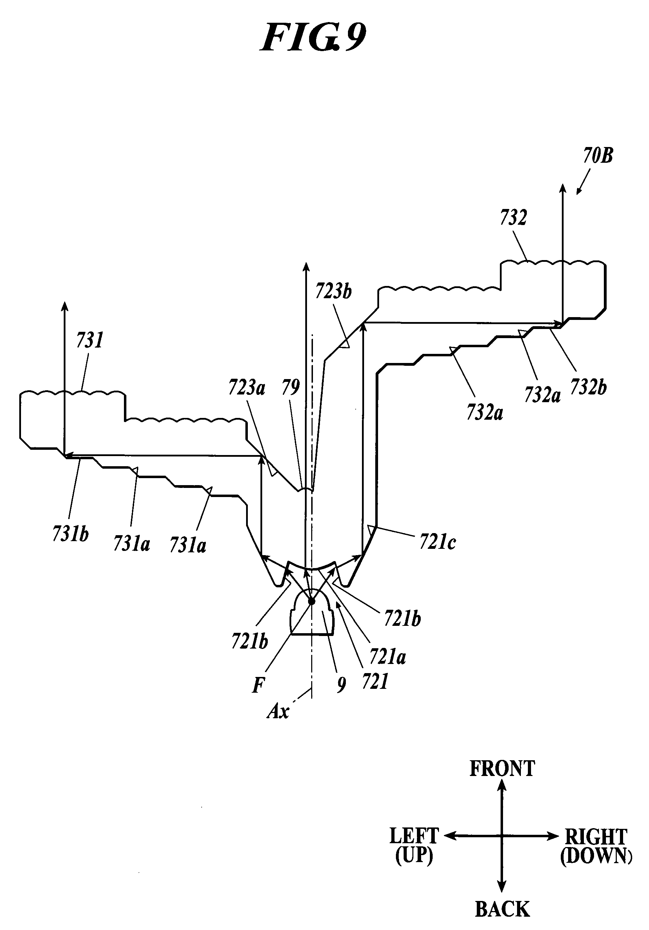

FIG. 9 is a schematic view of the light guide module according to the third embodiment. The third embodiment has a structure similar to that of the light guide 7 of the first embodiment by connecting the light guide modules 70B of FIG. 9 integrally in a line form instead of the light guide modules 70 of the first embodiment. Here, the diagram of the entire light guide which is formed by connecting the light guide modules 70B is not shown.

The light guide module 70B of the third embodiment differs from the light guide module 70 of the first embodiment in that the emitting section 79 is formed at the branching part of the bifurcated section which structures the branching section 722. The emitting section 79 is provided on the light axis Ax, and the emitting section 79 faces the same direction as the first emitting part 731 and the second emitting part 732 and the front surface thereof is formed in a convex surface shape. However, the front surface of the emitting section 79 may be formed in a concave surface shape or a plane surface shape.

Here, in FIG. 9, same symbols are used for the structures same as that of the first embodiment and the descriptions are omitted.

According to the third embodiment, light can also be emitted from between the first emitting part 731 and the second emitting part 732. Therefore, dark portion in between the first emitting part 731 and the second emitting part 732 can be reduced.

### <Fourth embodiment>

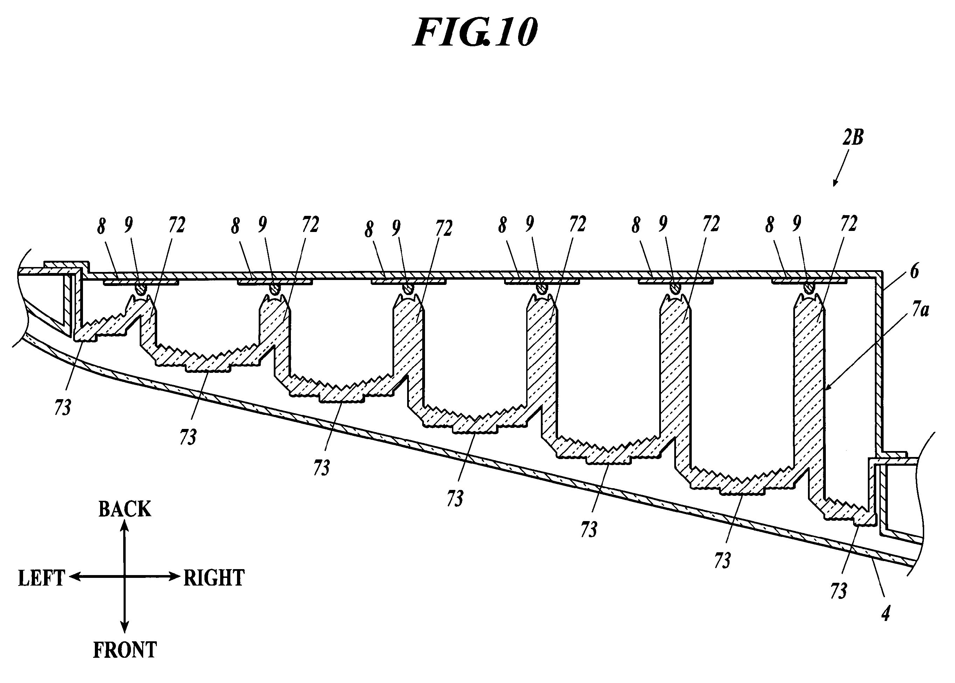

FIG. 10 is a horizontal sectional view of a tail lamp 2B according to the fourth embodiment.

In the fourth embodiment, the supporting member 6 of the tail lamp 2B is planarly formed so as to be orthogonal to the light axis Ax of the upper light guide 7a. The base plates 8 and the light emitting devices 9 are arranged on the front surface of the supporting member 6 by having a constant space therebetween. Further, with respect to the upper light guide 7a which is attached to the supporting member 6, the light guide sections 72 become longer as the light guide sections 72 approach the right side. Although, only the upper light guide 7a of the tail lamp is shown in FIG. 10, the right light guide 7b and the lower light guide 7c have the structure similar to the structure of the upper light guide 7a. The above are the aspects which make the fourth embodiment different from the first embodiment.

Here, in FIG. 10, same symbols are used for the structures same as that of the first embodiment and the descriptions are omitted.

According to the fourth embodiment, because the supporting member 6 is planarly formed, the supporting member 6 can be easily installed in the lamp house and can be easily replaced with an existing tail lamp.

### <Modification>

The present invention is not limited to the above described embodiments, and various modifications can be carried out within the scope of the invention.

For example, in the above embodiments, the present invention is applied to the tail lamp 2 of the combination lamp 1. However, the present invention can be applied to the turn signal lamp 3, a stop lamp (not shown) and a backup lamp (not shown). Further, the present invention may be applied to a high mountain stop lamp, a front turn lamp, a side turn lamp and the like other than the turn signal lamp 3, the stop lamp and the backup lamp.

Moreover, in the above embodiments, the light emitting devices 9 such as LED are used as the light sources. However, inorganic electroluminescent elements, organic electroluminescent elements or other semiconductor light emitting elements may be used as the light emitting devices. Further, bulbs (light bulb) may be used instead of the light emitting devices 9 as the light sources.

Furthermore, in the above first to third embodiments, cases in which a plurality of light guide modules having same shape are connected to each other are described. However, light guide modules having different shapes may be assembled. Further, the light guide modules may be formed as one body to be used.

According to a first aspect of the present invention, a lighting device for a vehicle includes a translucent cover which closes a lamp house of the vehicle, a light source which is provided in the lamp house and a light guide which is provided in front of the light source in the lamp house, the light guide including an emitting section having an emitting surface which faces forward and a light guide section which is formed integrally with the emitting section and which introduces light from the light source inside to guide the light to the emitting section, and the translucent cover has a slanted wall which faces the emitting section and is slanted with respect to a front direction, the emitting section is constituted of a plurality of emitting parts, the plurality of emitting parts are arranged parallelly along a slanting direction of the slanted wall via the light guide section, and two of the emitting parts which are adjacent to each other have a level difference between each other in a front-back direction so as to trace a slant of the slanted wall.

Preferably, the light guide section includes a light entering section from which the light from the light source enters, a branching section which branches the light entered from the light entering section in two, and two reflecting surfaces which reflects the light which is branched in two by the branching section separately to guide the light to the two of the emitting parts.

Preferably, the light guide section includes another emitting section, which emits the light entered from the light entering section without making the light go through the two reflecting surfaces, in between the two reflecting surfaces.

According to the present invention, the emitting section of the light guide is constituted of a plurality of emitting parts having level difference so as to trace the slant in the slanting direction of the slanted wall of the translucent cover. Therefore, for example, in a state where the lighting device of the vehicle is not lit, the distances between the translucent cover and the emitting parts are equal to each other. Therefore, when seen from the front through the translucent cover, the emitting sections can be visually confirmed uniformly. Further, in a state where the lighting device of the vehicle is lit, the degree of light emission of the light emitting surfaces of the emitting sections are uniformly vivid when seen from the front.

## Claims

1. A lighting device for a vehicle, comprising:
a translucent cover which closes a lamp house of the vehicle;
a light source which is provided in the lamp house; and
a light guide which is provided in front of the light source in the lamp house, the light guide including an emitting section having an emitting surface which faces forward and a light guide section which is formed integrally with the emitting section and which introduces light from the light source inside to guide the light to the emitting section,
wherein
the translucent cover has a slanted wall which faces the emitting section and is slanted with respect to a front direction,
the emitting section is constituted of a plurality of emitting parts;
the plurality of emitting parts are arranged parallelly along a slanting direction of the slanted wall via the light guide section,
two of the emitting parts which are adjacent to each other have a level difference between each other in a front-back direction so as to trace a slant of the slanted wall.

2. The lighting device for the vehicle according to claim 1, wherein the light guide section comprises
a light entering section from which the light from the light source enters,
a branching section which branches the light entered from the light entering section in two, and
two reflecting surfaces which reflects the light which is branched in two by the branching section separately to guide the light to the two of the emitting parts.

3. The lighting device for the vehicle according to claim 2, wherein the light guide section comprises another emitting section, which emits the light entered from the light entering section without making the light go through the two reflecting surfaces, in between the two reflecting surfaces.
